(19) **Europäisches Patentamt**
**European Patent Office**
**Office européen des brevets**

(11) **EP 1 648 183 B1**

(12) **EUROPEAN PATENT SPECIFICATION**

(45) Date of publication and mention
of the grant of the patent:
**25.09.2013 Bulletin 2013/39**

(51) Int Cl.:
*H04W 28/06* (2009.01)     *H04L 1/18* (2006.01)

(21) Application number: **04738180.1**

(86) International application number:
**PCT/CN2004/000557**

(22) Date of filing: **28.05.2004**

(87) International publication number:
**WO 2004/107776 (09.12.2004 Gazette 2004/50)**

(54) **A method for Adjusting Transmitting window in a Radio Link Control Layer**

Verfahren zur Einstellung des Sendefensters in einer Funkverbindungssteuerungsschicht

Procédé de réglage de la fenêtre de transmission dans une couche de commande de liaison

(84) Designated Contracting States:
**AT BE BG CH CY CZ DE DK EE ES FI FR GB GR
HU IE IT LI LU MC NL PL PT RO SE SI SK TR**

(30) Priority: **30.05.2003 CN 03126746**

(43) Date of publication of application:
**19.04.2006 Bulletin 2006/16**

(73) Proprietor: **ZTE Corporation**
**518057 Shenzhen City,
Guangdong Province (CN)**

(72) Inventors:
• **WANG, Qian,
ZTE Corporation,
ZTE Plaza
Shenzhen,
Guangdong 518057 (CN)**

• **DONG, Jia,
ZTE Corporation,
ZTE Plaza
Shenzhen,
Guangdong 518057 (CN)**
• **ZHU, Fusheng,
ZTE Corporation,
ZTE Plaza
Shenzhen,
Guangdong 518057 (CN)**

(74) Representative: **Schröer, Gernot H. et al
Meissner, Bolte & Partner GbR
Bankgasse 3
90402 Nürnberg (DE)**

(56) References cited:
EP-A- 0 249 035      EP-A1- 1 333 609
WO-A-00/62468      CN-A- 1 367 964
CN-A- 1 496 157      US-A1- 2002 004 389
US-B1- 6 415 410

## Description

## Technical Field

The present invention relates to radio link control in a cellular mobile communications system, especially relates to a method for adjusting transmitting window in a radio link control layer.

## Background of the Invention

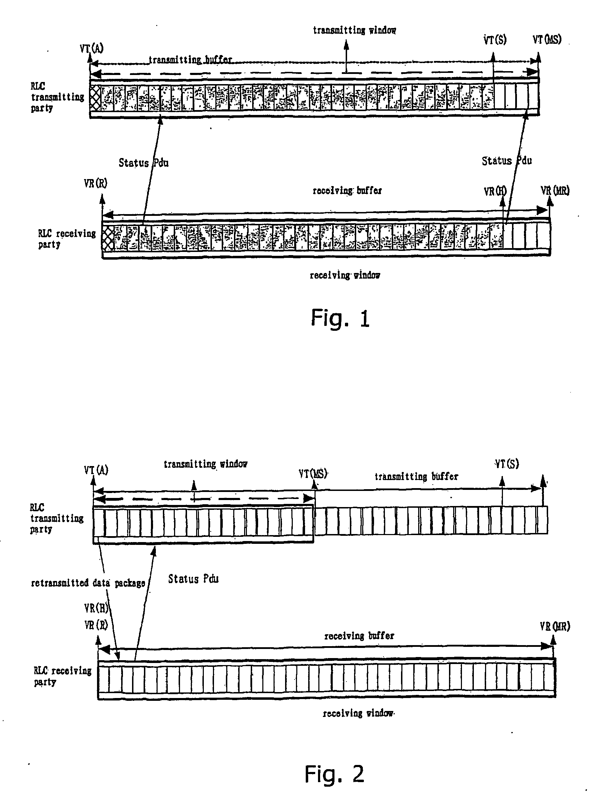

Radio Link Control (RLC) protocol is a control protocol based on sliding window, which is used for controlling the transmission of data package of radio link, as shown in Fig. 1. In a transmitting party of RLC, the block with cross-biases refers to the data package that is confirmed to have not been received by an opposing party and must be retransmitted, the blocks with shadow refer to the data package waiting to be confirmed by the opposing party, and the blank blocks refer to buffers that have not been used. In a receiving party of RLC, the block with cross-biases refers to the data package that has been lost during transmission by the opposing party and needs to be re-received, the blocks with shadow refer to data package that have been received, and the blank blocks refer to the buffer that have not been used.

Basic variables in RLC protocol are described in the following:

Configured_Tx_Window_Size: an initial value of transmitting window, which is configured to the RLC transmitting party by a upper protocol layer, and is also the largest size of transmitting window, with a unit presented by a number of Protocol Data Units (PDU); and the RLC transmitting party applies for transmitting buffer according to this variable.

VT(S): a variable of transmitting status, which represents a serial number of next Protocol Data Unit (PDU) that needs to be transmitted, not including a Protocol Data Unit (PDU) re-transmitted.

VT(A): a variable of confirmation status, which represents a serial number of next sequential Protocol Data Unit (PDU) that waits to be confirmed by the receiving party.

VT (MS) : a variable of maximum transmitting status, if a serial number of a Protocol Data Unit (PDU) exceeds or equal to this value, the Protocol Data Unit is not allowed to transmit, and VT (MS) =VT (A) +VT (WS) .

VT(WS): a size of transmitting window, its initial value, which is also the biggest value, is Configured_Tx_Window_ Size, the least value is 1 or value configured by other upper layer, and VT(WS) varies in this scope.

Configured_Rx_Window_Size: a size of initial receiving window, which is configured to the RLC receiving party by a upper protocol layer, with a unit represented by a number of Protocol Data Units (PDU); and RLC applies for receiving buffer according to this variable.

VR(R): a variable of receiving status, which represents a serial number of next sequential Protocol Data Unit (PDU) to be received.

VR(H): a variable of receiving status with highest expectation, which represents a serial number of highest Protocol Data Unit (PDU) expected to  be received.

VR (MR) : a variable of the biggest allowable receiving status, if a serial number of a Protocol Data Unit (PDU) exceeds or equal to this value, the Protocol Data Unit will be refused to receive by the RLC receiving party, and VR (MR) =VR (R) +Configured_ Rx_ Window_ Size.

The RLC receiving party notifies the RLC transmitting party by a status package PDU (Status PDU) that some packages have been received and some packages have not been received. After receiving the status package PDU, the RLC transmitting party changes the value of the variable of confirmation status VT(A), and pushes forward the variable of maximum transmitting status VT(MS), to guarantee continuous transmission of data.

When the RLC transmitting party detects that a certain PDU has not been answered by the receiving party, such as the block with cross-biases in the RLC transmitting party in Fig. 1, the value of the variable of transmitting status VT(S) is caused to continuously increase until reaching the variable of maximum transmitting status VT(MS), and then a data with a serial number more than or equal to VT(MS) will be not transmitted.

When RLC receiving party detects that a certain PDU has not been received, such as the block with cross-biases in the RLC receiving party in Fig. 1, the value of a variable of receiving status with highest expectation VR(H) is caused to continuously increase until reaching the variable of the biggest allowable receiving status VR(MR), and then a data with a serial number more than or equal to VR(MR) will be not received.

In the current RLC protocol, it provides that: a RLC receiving party, based on state of its own receiving buffer, controls a size of window for a RLC transmitting party to transmit data, thereby controlling the use of bandwidth for the radio link. Its scheme is including a window size indication (Window Size SUFI) information in a status package PDU transmitted to the RLC transmitting party, and, after the RLC transmitting party receives the Window Size SUFI information, changing the size of transmitting window VT(WS) to WSN. If WSN equals to zero, the SUFI information is discarded; if WSN exceeds the largest size of transmitting window Configured_Tx_Window_Size, the size of transmitting window VT(WS) is set as Configured_Tx_Window_Size. When the radio link deteriorates, data may be lost, which results in an increase in buffer in the RLC receiving party. At this time, the RLC receiving party reduces the data transmission from the RLC transmitting party by Window Size SUFI information, and notifies the RLC transmission party to decrease the size of transmitting window VT(WS), thereby decreasing the transmitting window and avoiding the congestion of data. When the RLC receiving party detects that an available space of receiving buffer is continuously increasing up to certain thresholds, as shown in Fig. 2, all re-transmitted packages have been received, and the RLC receiving party has no buffer to use; in the same way, the RLC receiving party notifies the RLC transmitting party to increase the size of transmitting window VT(WS) so that the transmitting window is increased and the use efficiency of bandwidth in data link is avoided to decrease.

US 6 415 410 B1 (the date of patent is 2002- 07- 02) discloses a digital data transmission system including a transmitting party, a receiving party, a non- transparent circuit- switched data connection between the transmitting and receiving parties, a control element for changing the data transmission capacity of the data connection, and a sliding-window data flow control protocol where the number of transmitted data frames to which the transmitting party has not received an acknowledgement from the receiving party is not allowed to exceed the size of sliding- window. The transmitting and receiving parties are arranged to change the size of the sliding window when one or both of them receive information from the control element on a change in the data transmission capacity of the data connection.

According to the actual measurement of different services, the lost probability of PDU in some none real time data services may be up to 10%. In good radio condition, a RLC protocol prescribes that the lost probability of PDU does not exceed 0.7%. Therefore, as compared, the lost probability of Window Size SUFI information is higher. However, according to provisions of the current protocol, the transmitting party does not detect the use of bandwidth in a radio link, and only adjust the size of transmitting window according to the requirement in Window Size SUFI information received from the receiving party. Thus if Window Size SUFI information is lost, the transmitting party will not adjust the window on its own initiative. Moreover, there is no uniform criterion on triggering Window Size SUFI information in RLC protocol, and after one triggering it may take a long time for further triggering. Especially while the condition in the radio link becomes good and the probability of package lost decreases, the Window Size SUFI information may not be even triggered, and, during this period, even if the radio link is good, data may be transmitted at a low rate In the radio link, thereby seriously decreasing the rate of the radio link.

### Summary of Invention

The present invention provides a method for adjusting transmitting window in a Radio Link Control Layer to efficiently overcome such shortages in the prior art that the use of bandwidth in radio link is fully controlled by the receiving party so that it is impossible to adjust the transmitting window in time due to loss of Window Size SUFI information and then the use efficiency of bandwidth for the radio link control protocol is decreased.

The features of the method according to the present invention are defined in the independent claim, and the preferable features according to the present invention are defined in the dependent claims.

According to the present invention, the RLC transmitting party does not depend on Window Size SUFI information transmitted by the RLC receive party, but determines the use state of the link bandwidth, and thereby adjusts the size of transmitting window. In such way, the defect that the transmitting window is unable to be adjusted timely when Window Size SUFI information is lost can be avoided, and the transmitting window can be adjusted promptly, approaching the aim of utilizing radio bandwidth fully and most efficiently.

### Brief Description of the Drawings

Fig. 1 is a schematic diagram of radio link control protocol;

Fig. 2 is a schematic diagram in which a RLC receiving party notifies a RLC transmitting party to change the size of transmitting window through a status package including Window Size SUFI information; and

Fig. 3 is a flow chart for a method of the present invention.

**Detailed Description of the Preferred Embodiment**

The present invention will be further described in more details in the following in combination with the appended drawings.

Basic idea of the present invention is determining a status of buffer in the RLC receive party by detecting periodically relationship of variables in the RLC transmitting party. As shown in Fig. 1, when data PDU is confirmed to loss in the RLC transmitting party, as the block with cross-biases, a relative distance between a variable of confirmation status VT (A) and a variable of transmitting status VT (S) enlarges gradually, and occupation in transmitting buffer increases gradually. In the RLC receiving party, because loss of data PDU also occurs, as the block with cross-biases, a relative distance between a variable of receiving status VR(R) and a variable of receiving status with highest expectation VR(H) enlarges gradually, and occupation in transmitting buffer of the receiving party increases gradually.

However, due to delay effect of radio link, the value of the variable of receiving status with highest expectation VR (H) will be not larger than the value of the variable of receiving statusVT (S), and the value of the variable of confirmation status VT (A) will be not larger than the value of the variable of receiving status VR (R) . That is also to say, the relative distance between the variable of receiving status VR (R) and the variable of receiving status with highest expectation VR (H) will be certainly not larger than the relative distance between the variable of confirmation status VT (A) and variable of transmitting status VT (S), that is,

$$(4096 + VT(S) - VT(A)) \bmod 4096 \geq (4096 + VR(H) - VR(R)) \bmod 4096.$$

But for configuration of common RLC Protocol variables, that is,

$$Configured\_Rx\_Window\_Size \geq Configured\_Tx\_Window\_Size.$$

In Protocol 3GPP TS 25.306, it states that RLC transmitting buffer should be applied according to the transmitting window, and RLC receiving buffer should be applied according to the receiving window. Moreover, since Configured_Tx_Window_Size and Configured_Rx_Window_Size are initial values of the RLC transmitting window and receiving window, when the radio resource is established, a transmitting buffer is certainly applied for according to Configured_Tx_Window_Size, a receiving buffer is applied for according to Configured_Rx_Window_Size. Therefore, occupation status of buffer in the RLC receiving party can be obtained by detecting periodically a ratio K of a variable of transmitting status VT(S) and a variable of confirmation status VT(A) to the largest size of transmitting window Configured_Tx_Window_Size in the RLC transmitting party.

Even if *Configured_Rx_Window_Size<Configured_Tx_Window_Size*, the ratio K of a variable of transmitting status VT(S) and a variable of confirmation status VT(A) to the largest size of transmitting window Configured_Tx_Window_Size can also be modified by adjusting a weight factor P. If a certain relationship, such as less than, is satisfied when comparing the ratio K and a certain threshold N, the RLC transmitting party may be taken as less occupation in buffer of RLC receiving party, and then a size of transmitting window VT(WS) is detected; if VT(WS) is less than W, a size of transmitting window that can be satisfied by the radio link, it indicates that the radio bandwidth is not utilized sufficiently, and VT(WS) needs to be set as W, the size of transmitting window that can be satisfied by the radio link.

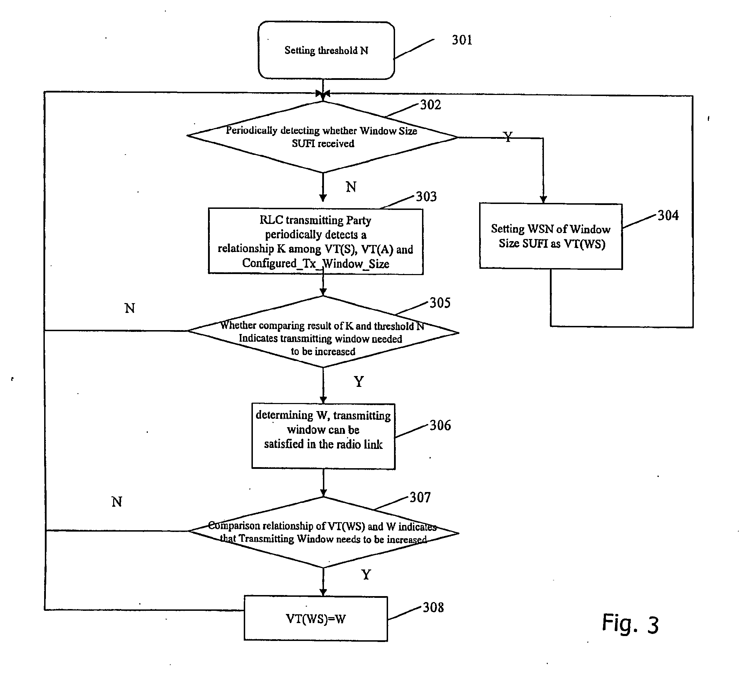

Detailed steps of the present invention are shown in Fig. 3.

Step 301: setting a threshold N, in which the threshold N is commonly very little, which can be estimated according to the transmitting window and the requirement of transmission rate in the radio link, and the threshold preferably is about 10;

Step 302: detecting periodically whether Window Size SUFI information is received in the RLC transmitting party, if yes, transferring to step 304, otherwise, going to step 303;

Step 303: detecting periodically a ratio K of a variable of transmitting status VT(S) and a variable of confirmation status VT(A) to the largest size of transmitting window Configured_Tx_Window_Size in the RLC transmitting party, in which the ratio K represents a ratio of a relative distance between VT(S) and VT(A) to the Configured_Tx_Window_Size;

Step 305: comparing the ratio K and threshold N, if the ratio K is less than threshold N, indicating that the size of transmitting window needs to enhance, transferring to step 306, otherwise, returning to step 302;

Step 306: calculating a size of transmitting window that can be satisfied by the radio link, W, according to the variable of transmitting status VT(S), the variable of confirmation status VT(A) and the largest size of transmitting window Configured_Tx_Window_Size; or establishing in advance in the RLC Transmitting party a corresponding relationship between K and W, and determining directly a corresponding size of transmitting window W according to a value of K;
Step 307: comparing a size of transmitting window comparing VT(WS) and W, if VT(WS) <W, going to step 308, otherwise going to step 302;
Step 308: setting the value of VT(WS) as W, and going to Step 302; and Step 304: setting the value of VT(WS) as a value of WSN in Window Size SUFI information received lately, and going to step 302 for continuing to detect.

The above process is being performed in entire operation in the RLC transmitting party, until the RLC Transmitting party expires.

It will be described in an embodiment below, in which the ratio K is calculated by the following formula:

$$K = \frac{(4096 + VT(S) - VT(A) \bmod 4096)}{Configred\_Tx\_Window\_size} * 100 * P,$$

if K>100, K=100; and, in this formula, P is a weight factor, and satisfies the following condition:

$$P = \frac{Configured\_Tx\_Window\_Size}{Configured\_Rx\_Window\_Size}, \quad P \neq 0.$$

And W, a size of transmitting window that can be satisfied by the radio link, can be calculated as follows:

$$W = \frac{(100 - K) * Configured\_Tx\_Window\_Size}{100 * P},$$

and used after rounding down the value calculated in above formula.

The threshold is set as: N=10, when K<N, the size of transmitting window is increased. It is supposed that configured_Tx_Window_Size = 512, Configured_Rx_Window_Size = 512, the size of transmitting window VT (WS) detected in the RLC transmitting party is 1, the variable of transmitting status VT(S) = the variable of confirmation status VT(A) = 300.

Such process may be implemented as follows:

setting threshold N=10; the transmitting party does not receive Window Size SUFI information, then detecting periodically the value of the ratio K, here K=0; deciding whether a comparison of K and N satisfies a condition for increasing the window size, since K<N, the size of transmitting window needs to be increased; calculating W, the size of transmitting window that can be satisfied by the radio link,

$$W = Configured\_Tx\_Window\_Size = 512;$$

comparing the size of transmitting window VT (WS) with W, which meets VT(WS)<W; setting the size of transmitting window VT(WS) as the value of W, 512; then continuing for detecting.

It should be noted that, the embodiments described above are only intended to illustrate the technical solutions of the present invention, not limitation to the present invention. The scope of the invention is defined by the claims.

**Claims**

1.  A method for adjusting transmitting window in a radio link control RLC layer, comprising:

    a RLC transmitting party controlling the use of bandwidth in radio link by
    determining a use state of the bandwidth in radio link and deciding whether a size of transmitting window needs to be adjusted based on the use state, and
    adjusting the size of transmitting window if deciding the size of transmitting window needs to be adjusted, which comprises: determining W, a size of transmitting window that can be satisfied by the radio link (306); and comparing a size of transmitting window VT(WS) with W (307), and, if VT(WS) is less than W, setting the value of VT(WS) as W (308):
    **characterized in that** the step of deciding whether a size of transmitting window needs to be adjusted comprises:

    Step 1: setting a threshold N according to a condition of a radio link (301);
    Step 2: detecting periodically a ratio K of a variable of transmitting status VT(S) and a variable of confirmation status VT(A) to and a largest size of transmitting window Configured_Tx_Window_Size in the RLC transmitting party, the ratio K representing a ratio of a relative distance between VT(S) and VT(A) to the Configured_Tx_Window_Size (303); and
    Step 3: comparing the ratio K with the threshold N (305), and performing the step of adjusting the size of transmitting window if the ratio K is less than the threshold N (306), otherwise returning to step 2.

2.  The method for adjusting transmitting window in a RLC layer of claim 1, wherein the threshold N is estimated according to requirements of the transmitting window and transmitting speed in the radio link.

3.  The method for adjusting transmitting window in a RLC layer of claim 1, wherein the ratio K is calculated by the following formula:

$$K = \frac{(4096 + VT(S) - VT(A) \bmod 4096)}{Configred\_Tx\_Window\_size} * 100 * P,$$

    if K>100, selecting K=100; P is a weight factor in above formula, and satisfies the following condition:

$$P = \frac{Configured\_Tx\_Window\_Size}{Configured\_Rx\_Window\_Size}, \quad p \neq 0.$$

4.  The method for adjusting transmitting window in a RLC layer of claim 1, wherein the size of transmitting window W can be calculated by the RLC Transmitting party according to the variable of transmitting status VT(S), the variable of confirmation status VT(A) and the largest size of transmitting window Configured_Tx_Window_Size; or be determined according to a corresponding relationship, established in advance in the RLC Transmitting party, between W and the ratio K of the variable of transmitting status VT(S) and the variable of confirmation status VT(A) to and the largest size of transmitting window Configured_Tx_Window_Size.

5.  The method for adjusting transmitting window in a RLC layer of claim 4, wherein the size of transmitting window W can be calculated according to the following formula:

$$W = \frac{(100 - K) * Configured\_Tx\_Window\_Size}{100 * P},$$

    in which P is a weight factor and satisfies:

$$P = \frac{Configured\_Tx\_Window\_Size}{Configured\_Rx\_Window\_Size}, \quad P \neq 0,$$

after rounding down, W can be used.

6. The method for adjusting transmitting window in a RLC layer of claim 1, and the method further comprising: before the step of deciding periodically whether a size of transmitting window needs to be adjusted is performed, whether Window Size SUFI information is received being detected periodically by the RLC transmitting party first (302), if received, the size of transmitting window VT(WS) being set as a value of WSN in Window Size SUFI information received lately (304), if not received, the step of deciding periodically whether a size of transmitting window needs to be adjusted being performed (303).

**Patentansprüche**

1. Verfahren zur Einstellung des Sendefensters in einer Funkverbindungs-Steuerungsschicht bzw. RLC-Schicht, welches folgendes umfasst:

   einen RLC-Sendepartner, welcher die Verwendung der Bandbreite in einer Funkverbindung durch Bestimmung eines Benutzungszustands der Bandbreite in einer Funkverbindung steuert und entscheidet, ob eine Größe des Sendefensters auf der Grundlage des Benutzungszustands eingestellt werden muss, und welcher die Größe des Sendefensters einstellt, wenn entschieden wird, dass die Größe des Sendefensters eingestellt werden muss, was folgendes umfasst: Bestimmung von W, einer Größe des Sendefensters, die durch die Funkverbindung (306) erfüllt werden kann, und Vergleich einer Größe des Sendefensters VT(WS) mit W (307), und wenn VT(WS) kleiner als W ist, Einstellung des Wertes von VT(WS) als W (308), **dadurch gekennzeichnet, dass** der Schritt zur Entscheidung darüber, ob eine Größe des Sendefensters eingestellt werden muss, folgendes umfasst:

   Schritt 1: Einstellen eines Schwellwerts N entsprechend einem Zustand einer Funkverbindung (301);
   Schritt 2: periodisches Abtasten eines Verhältnisses K zwischen einer Variablen für den Sendezustands (VT(S) und einer Variablen für den Bestätigungszustand (VT(A) und einer größten Größe des Sendefensters Configured_Tx-Window-Size beim RLC-Sendepartner, wobei das Verhältnis K ein Verhältnis zwischen einem relativen Abstand zwischen VT(S) und VT(A) und der Größe Configured_Tx_Window-Size (303) repräsentiert; und
   Schritt 3: Vergleichen des Verhältnisses K mit dem Schwellwert N (305) und Ausführung des Schritts zur Einstellung der Größe des Sendefensters, wenn das Verhältnis K kleiner als der Schwellwert N (306) ist; ansonsten Zurückschaltung zu Schritt 2.

2. Verfahren zur Einstellung des Sendefensters in einer RLC-Schicht nach Anspruch 1, bei welchem der Schwellwert N entsprechend den Anforderungen des Sendefensters und der Übertragungsgeschwindigkeit in der Funkverbindung hochgerechnet wird.

3. Verfahren zur Einstellung des Sendefensters in einer RLC-Schicht nach Anspruch 1, bei welchem das Verhältnis K nach der folgenden Formel berechnet wird:

$$K = \frac{-(4096 + VT(S) - VT(A)mod4096)}{Configured\_Tx\_Window\_size} * 100 * P$$

Falls K > 100 wird K = 100 gewählt;
P ist ein Gewichtungsfaktor in der obigen Formel und erfüllt die folgende Bedingung:

$$P = \frac{Configured\_Tx\_Window\_Size}{Configured\_Rx\_Window\_Size} \; , \qquad P \neq 0$$

**4.** Verfahren zur Einstellung des Sendefensters in einer RLC-Schicht nach Anspruch 1, bei welchem die Größe des Sendefensters W von dem RLC-Sendepartner entsprechend der Variablen für den Sendestatus VT(S), der Variablen für den Bestätigungsstatus VT(A) und der größten Größe des Sendefensters Configured_Tx_Window-Size berechnet werden kann;: oder gemäß einer entsprechenden Beziehung bestimmt werden kann, die zwischen W und dem Verhältnis K zwischen der Variablen für den Sendestatus VT(S) und der Variablen für den Bestätigungsstatus VT (A) und der größten Größe des Sendefensters Configured_Tx_Window-Size in dem RLC-Sendepartner im Voraus festgelegt wird.

**5.** Verfahren zur Einstellung des Sendefensters in einer RLC-Schicht nach Anspruch 4, bei welchem die Größe des Sendefensters W entsprechend der folgenden Formel berechnet werden kann:

$$W = \frac{(100 - K) * Configured\_Tx\_Window\_Size}{100 * P}$$

wobei P ein Gewichtungsfaktor ist und folgende Bedingung erfüllt:

$$P = \frac{Configured\_Tx\_Window\_Size}{Configured\_Rx\_Window\_Size} \; , \qquad P \neq 0$$

wobei nach Abrundung W verwendet werden kann.

**6.** Verfahren zur Einstellung des Sendefensters in einer RLC-Schicht nach Anspruch 1, welches des Weiteren Folgendes umfasst: vor Ausführung des Schritts zur periodischen Entscheidung, ob eine Größe des Sendefensters eingestellt werden muss, ob die Information Window Size SUFI bzw. "Fenstergröße ausreichend" empfangen wird, die von dem RLC-Sendepartner als erstes periodisch erfasst wird (302), wird, wenn diese empfangen wurde, die Größe des Sendefensters VT(WS) als Wert von WSN in der kürzlich empfangenen Information Window Size SUFI gesetzt; wurde sie nicht empfangen, wird der Schritt zur periodischen Entscheidung darüber, ob eine Größe des Sendefensters eingestellt werden muss, ausgeführt (303).

**Revendications**

**1.** Procédé d'ajustement de fenêtre de transmission dans une couche de commande de liaison radio RLC (Radio Link Control), comprenant:

une partie de transmission de RLC contrôlant l'utilisation d'une bande passante dans une liaison radio en déterminant un état d'utilisation de la bande passante dans la liaison radio et en décidant si une taille de la fenêtre de transmission doit être ajustée sur la base de l'état d'utilisation, et
en ajustant la taille de la fenêtre de transmission s'il est décidé que la taille de la fenêtre de transmission doit être ajustée, l'ajustement comprenant : la détermination de W, une taille de la fenêtre de transmission qui peut être satisfaite par la liaison radio (306) ; et la comparaison d'une taille de la fenêtre de transmission VT(WS) à W (307) et, si VT(WS) est inférieure à W, la définition de la valeur de VT(WS) comme étant W (308) ;
**caractérisé en ce que** l'étape de décision pour déterminer si une taille de fenêtre de transmission doit être ajustée comprend :

étape 1 : la définition d'un seuil N selon une condition d'une liaison radio (301) ;
étape 2 : la détection périodique d'un rapport K d'une variable d'état de transmission VT(S) et d'une variable d'état de confirmation VT(A) et d'une taille la plus grande de la fenêtre de transmission Configured_Tx_Window_Size dans la partie de transmission de RLC, le rapport K représentant un rapport d'une distance relative entre VT(S) et VT(A) sur la taille Configured_Tx_Window_Size (303) ; et

étape 3 : la comparaison du rapport K au seuil N (305), et l'exécution de l'étape d'ajustement de la taille de la fenêtre de transmission si le rapport K est inférieur au seuil N (306), sinon le retour à l'étape 2.

2. Procédé d'ajustement de fenêtre de transmission dans une couche RLC selon la revendication 1, dans lequel le seuil N est estimé selon les exigences de la fenêtre de transmission et la vitesse de transmission dans la liaison radio.

3. Procédé d'ajustement de fenêtre de transmission dans une couche RLC selon la revendication 1, dans lequel le rapport K est calculé par la formule suivante :

$$K = \frac{(4096 + VT(S) - VT(A) \bmod 4096)}{Configred\_Tx\_Window\_size} * 100 * P,$$

si K > 100, sélectionner K = 100 ; P est un facteur de pondération dans la formule ci-dessus, et satisfait la condition suivante :

$$P = \frac{Configured\_Tx\_Window\_Size}{Configured\_Rx\_Window\_Size}, \quad P \neq 0.$$

4. Procédé d'ajustement de fenêtre de transmission dans une couche RLC selon la revendication 1, dans lequel la taille de la fenêtre de transmission W peut être calculée par la partie de transmission de RLC selon la variable d'état de transmission VT(S), la variable d'état de confirmation VT(A) et la taille la plus grande de la fenêtre de transmission Configured_Tx_Window_Size ; ou être déterminée selon une relation correspondante, établie à l'avance dans la partie de transmission de RLC, entre W et le rapport K de la variable d'état de transmission VT(S) et la variable d'état de confirmation VT(A) et de la taille la plus grande de la fenêtre de transmission Configured_Tx_Window_Size.

5. Procédé d'ajustement de fenêtre de transmission dans une couche RLC selon la revendication 4, dans lequel la taille de la fenêtre de transmission W peut être calculée selon la formule suivante :

$$W = \frac{(100 - K) * Configured\_Tx\_Window\_Size}{100 * P},$$

où P est le facteur de pondération et satisfait :

$$P = \frac{Configured\_Tx\_Window\_Size}{Configured\_Rx\_Window\_Size}, \quad P \neq 0.$$

après arrondissement, W peut être utilisé.

6. Procédé d'ajustement de fenêtre de transmission dans une couche RLC selon la revendication 1, le procédé comprenant en outre : avant exécution de l'étape de décision périodique pour déterminer si une taille de fenêtre de transmission doit être ajustée, la détection périodique de la réception ou non d'informations Windows *Size SUFI*, par la partie de transmission de RLC en premier (302), en cas de réception, la taille de la fenêtre de transmission *VT(WS) est* définie comme une valeur de WSN dans les informations Window Size SUFI reçues ultérieurement (304), en cas de non-réception, l'étape de décision périodique pour déterminer si une taille de fenêtre de transmission doit être ajustée étant exécutée (303).

Fig. 1

Fig. 2

12

```
                    ┌─────────────────────────┐
                    │   Setting threshold N    │────── 301
                    └─────────────────────────┘
                                 │
                    ╱────────────────────────────╲
                   ╱  Periodically detecting whether ╲──────── 302
                   ╲  Window Size SUFI received      ╱───── Y ──┐
                    ╲────────────────────────────╱            │
                                 │ N                            │
        ┌────────────────────────────────────┐        ┌──────────────────────┐
        │        RLC transmitting Party        │── 303  │  Setting WSN of Window│── 304
        │         periodically detects a       │        │  Size SUFI as VT(WS)  │
        │  relationship K among VT(S), VT(A)   │        └──────────────────────┘
        │      and Configured_Tx_Window_Size   │
        └────────────────────────────────────┘
                                 │
                    ╱────────────────────────────╲
             N ────╱  Whether comparing result of K ╲──────── 305
                   ╲  and threshold N Indicates      ╱
                    ╲ transmitting window needed to ╱
                     ╲       be increased          ╱
                                 │ Y
                    ┌────────────────────────┐
                    │  determining W,          │── 306
                    │  transmitting window can │
                    │  be satisfied in the     │
                    │  radio link              │
                    └────────────────────────┘
                                 │
                    ╱────────────────────────────╲
             N ────╱  Comparison relationship of   ╲──────── 307
                   ╲  VT(WS) and W indicates that   ╱
                    ╲ Transmitting Window needs to ╱
                     ╲     be increased           ╱
                                 │ Y
                    ┌────────────────────────┐
                    │       VT(WS)=W           │── 308
                    └────────────────────────┘
```

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6415410 B1